# EUROPÄISCHE PATENTANMELDUNG

(11) **EP 2 156 992 A1**
(43) Veröffentlichungstag der Anmeldung: **24.02.2010**
(21) Anmeldenummer: 09009366.7
(22) Anmeldetag: 20.07.2009
(51) Int. Cl.: B60R 19/38, B60R 19/26, B62D 21/15, B62D 27/06

(54) **Crashoptimiertes Frontendmodul für ein Fahrzeug**

(30) Priorität: 22.08.2008 DE 102008039315
(71) Anmelder: VOLKSWAGEN AG, 38436 Wolfsburg (DE)
(72) Erfinder: Ippoliti, Mario, 38444 Wolfsburg (DE); Wichert, Volker, 38440 Wolfsburg (DE); Jürgens, Heiko, 38471 Rühen (DE)

(57) **Zusammenfassung**

Im Wesentlichen wird ein Frontendmodul (1) mit einem zumindest ein Aggregat tragenden Montageträger (2) vorgeschlagen, welcher seinerseits über je eine Schottplatte (3) an vorderen Längsträgern (4) der Fahrzeugkarosserie abgestützt und vermittels mechanischer Befestigungselemente so an besagten Schottplatten (3) verschiebbar befestigt ist, dass im Falle einer infolge eines Frontalcrashs auf den Montageträger (2) einwirkenden erhöhten Anstoßkraft "F" ein definiertes Ausweichen desselben in Fahrzeuglängsrichtung (X-Richtung) nach hinten, d. h., vom Crashgegner weg, gestattet ist, wobei die mechanischen Befestigungselemente jeweils durch wenigstens eine in einem in Fahrzeuglängsrichtung (X-Richtung) ausgerichteten Langloch (9, 10) des Montageträgers (2) und/oder der Schottplatte (3) geführte und einen Reibschluss zwischen dem Montageträger (2) und der Schottplatte (3) bewirkende Befestigungsschraube (11, 12) gebildet sind, und wobei der bewirkte Reibschluss derart definiert eingestellt ist, dass derselbe erst infolge der einwirkenden erhöhten Anstoßkraft "F" überwindbar ist.

## Beschreibung

Die Erfindung betrifft ein crashoptimiertes Frontendmodul für ein Fahrzeug, insbesondere Kraftfahrzeug, gemäß der Merkmalskombination des Patentanspruchs 1.

Ein Frontendmodul eines Fahrzeugs, insbesondere Kraftfahrzeugs, besteht bekanntermaßen aus einer Mehrzahl von Einzelteilen, welche durch einen Montageträger definiert positioniert und zusammengehalten werden. Es stellt somit das vordere Ende eines Kraftfahrzeugs dar und beinhaltet neben besagten Montageträger im Wesentlichen ein Stoßfängersystem, diverse elektrische Komponenten, wie Scheinwerfer, Verkabelungen, Sensorik u. ä., ein Haubenschloss, Dichtungen, ein Kühlersystem u. a. In der Praxis haben sich Montageträger aus Kunststoff, ggf. aus einem faserverstärkten Kunststoff, mit metallenen Verstärkungen bewährt, die ihrerseits in die Kunststoffstruktur des Montageträgers eingelegt und mit dieser vorzugsweise mittels mechanischer Befestigungselemente fest verbunden sind. Diese Maßnahmen dienen zum einen der Verbesserung des Crashwiderstandes, zum anderen sind durch die Anbindung der metallenen Verstärkungen an obere und/oder untere vordere Längsträger Verbesserungen in der Karosseriesteifigkeit zu verzeichnen. So ist aus der DE 198 13 162 A1 ein solcher Montageträger bekannt, der seinerseits ein horizontal verlaufendes oberes langgestrecktes Verstärkungselement aus Metall aufweist, welches sich im Breitenbereich des Fahrzeugs erstreckt. Aus der DE 199 19 258 A1 ist ferner ein FrontendModul bekannt, welches neben dem Montageträger aus Kunststoff einen denselben verstärkenden Rahmen aufweist, der seinerseits mehrteilig ausgebildet ist und sich aus wenigstens vier Einzelbauteilen zusammengesetzt, nämlich aus einem oben angeordneten Schlossquerträger, einem unten angeordneten Stoßfängerquerträger und zwei dieselben verbindenden vertikal angeordneten Versteifungsteilen. Der gebildete Rahmen ist beidseitig der Kraftfahrzeugkarosserie an je einem oberen und unteren Längsträger angeschlossen, woraus ein verbessertes Crashverhalten resultiert. Im Falle eines Frontalaufpralles mit hohen aufzunehmenden Kräften, erfüllen derartige Frontendmodule bzw. derart versteifte Montageträger ihren Zweck, nämlich einen ausreichenden Crashwiderstand bereitzustellen, wobei sicherlich bei einem Frontalcrash mit hoher Anstoßgeschwindigkeit ein Großteil der vom Montageträger getragenen Bauteile und Aggregate eine Zerstörung erfährt. Ungeachtet dessen sind jedoch auch bei Crashereignissen, die mit relativ geringen Anstoßgeschwindigkeiten von etwa 15 km/h einhergehen, Zerstörungen, zumindest jedoch Beschädigungen an dem Stoßfänger nachgeordneten Bauteilen, wie eben am Montageträger und an von demselben getragenen Bauteilen und Aggregaten zu verzeichnen, welches sich nachteilig auf eine etwaige versicherungstechnische Einstufung des betreffenden Fahrzeugs, respektive Kraftfahrzeugs, insbesondere im Hinblick auf eine Vollkaskoversicherung, auswirkt. Um diesem Umstand zu begegnen, ist es bekannt, ein einzelnes Aggregat, nämlich ein Kühlermodul separat so an tragenden Bauteilen anzuordnen und abzustützen, dass dieses im Crashfall (Frontalcrash) nach hinten ausweichen kann, wodurch die Gefahr einer Zerstörung bzw. maßgeblichen Beschädigung desselben bei besagten niedrigen Anstoßgeschwindigkeiten vermieden, zumindest jedoch minimiert ist. Danach beschreibt die DE 20 2004 011 632 U1 ein mittels Haltezapfen in Langlöchern eines tragenden Bauteils der Fahrzeugkarosserie elastisch gelagertes Kühlermodul eines Kraftfahrzeugs, wobei die Langlöcher in Fahrzeuglängsrichtung ausgerichtet sind und bei Überschreiten einer bestimmten Haltekraft bzw. Kraftschwelle infolge eines Frontalcrashs eine Bewegung des Kühlermoduls entlang der Langlöcher nach hinten, d. h., vom Crashhindernis weg, gestatten. Ähnliche Lösungen zur Lagerung eines Kühlermoduls sind aus der DE 100 04 420 B4, der DE 20 2004 011 632 U1, der DE 100 08 638 B4 und der WO 2005/105552 A2 bekannt. Demgegenüber ist aus der DE 10 2006 024 786 A1 ein Fahrzeug-Endmodul, insbesondere Frontendmodul für eine Fahrzeugkarosserie bekannt, welches einen Montageträger aufweist, der seinerseits bei einer Kollision zerstörungsfrei verlagerbar ist. Im Wesentlichen ist hierbei zumindest ein seitlicher Bolzen vorgesehen, welcher in einer Kulisse bzw. in einem Langloch eines Halteelementes längsverschiebbar geführt ist, wobei besagter Kulisse ein Sperrelement zugeordnet ist, das den Bolzen des Montageträgers in der Fahrzeuglängsrichtung (X-Richtung) ortsfest hält, jedoch bei besagter Kollision bricht und den Bolzen zwecks Verlagerung des Montageträgers innerhalb der Kulisse freigibt.

Ausgehend von der gattungsbestimmenden DE 10 2006 024 786 A1 ist es Aufgabe der Erfindung, ein im Hinblick auf einen etwaigen Frontalcrash weiter optimiertes Frontendmodul für ein Fahrzeug, insbesondere Kraftfahrzeug, zu schaffen, mit dem mit geringstem Aufwand bei geringen Anstoßgeschwindigkeiten von etwa 15 km/h eine Zerstörung bzw. maßgebliche Beschädigung des Montageträgers samt der von diesem getragenen Aggregate weitestgehend vermieden ist.

Gelöst wird die gestellte Aufgabe demnach durch ein crashoptimiertes Frontendmodul für ein Fahrzeug, insbesondere Kraftfahrzeug, mit einem zumindest ein Aggregat tragenden Montageträger, welcher seinerseits über je eine Schottplatte an vorderen Längsträgern der Fahrzeugkarosserie abgestützt und vermittels mechanischer Befestigungselemente so an besagten Schottplatten verschiebbar befestigt ist, dass im Falle einer infolge eines Frontalcrashs auf den Montageträger einwirkenden erhöhten Anstoßkraft "F" ein definiertes Ausweichen desselben in Fahrzeuglängsrichtung (X-Richtung) nach hinten, d. h., vom Crashgegner weg, gestattet ist, wobei die mechanischen Befestigungselemente jeweils durch wenigstens eine in einem in Fahrzeuglängsrichtung (X-Richtung) ausgerichteten Langloch des Montageträgers und/oder der Schottplatte geführte und einen Reibschluss zwischen dem Montageträger und der Schottplatte bewirkende Befestigungsschraube gebildet sind, und wobei der bewirkte Reibschluss derart definiert eingestellt ist, dass derselbe erst infolge der einwirkenden erhöhten Anstoßkraft "F" überwindbar ist.

Im Falle eines Frontalcrashs ist durch diese äußerst einfache und kostengünstige Befestigungsmaßnahme eine definierte Verlagerung des Montageträgers aus dem Gefahrenbereich heraus nach hinten gestattet.

Die Unteransprüche beschreiben bevorzugte Weiterbildungen oder Ausgestaltungen der Erfindung.

Danach sind der eingestellte Reibschluss und demgemäß das auf die Befestigungsschraube aufzubringende Anzugsmoment in Abhängigkeit von der gewählten Anstoßkraft rechnerisch oder empirisch im Rahmen von Versuchen ermittelt. Vorteilhaft ist die Schottplatte als separates Anbauteil ausgebildet sowie an einem Strirnflansch des Längsträgers festgelegt und weist zumindest einen in Fahrzeuglängsrichtung (X-Richtung) abgestellten Flansch zur Aufnahme der zumindest einen Befestigungsschraube auf. Weiter vorteilhaft ist der Montageträger überwiegend aus Kunststoff ausgebildet, wogegen sich für die Schottplatte ein Blechprofil aus Stahlblech anbietet.

Die Erfindung wird nachstehend anhand eines in den Zeichnungen schematisch dargestellten Ausführungsbeispieles näher erläutert. Es zeigen:
- Fig. 1: die perspektivische Teilansicht eines erfindungsgemäß ausgebildeten Frontendmoduls eines Fahrzeugs, insbesondere Kraftfahrzeugs, unmittelbar vor einem Crashereignis (Ausgangssituation), und
- Fig. 2: das Frontendmodul nach Fig. 1 in einer Situation unmittelbar nach dem Crashereignis.

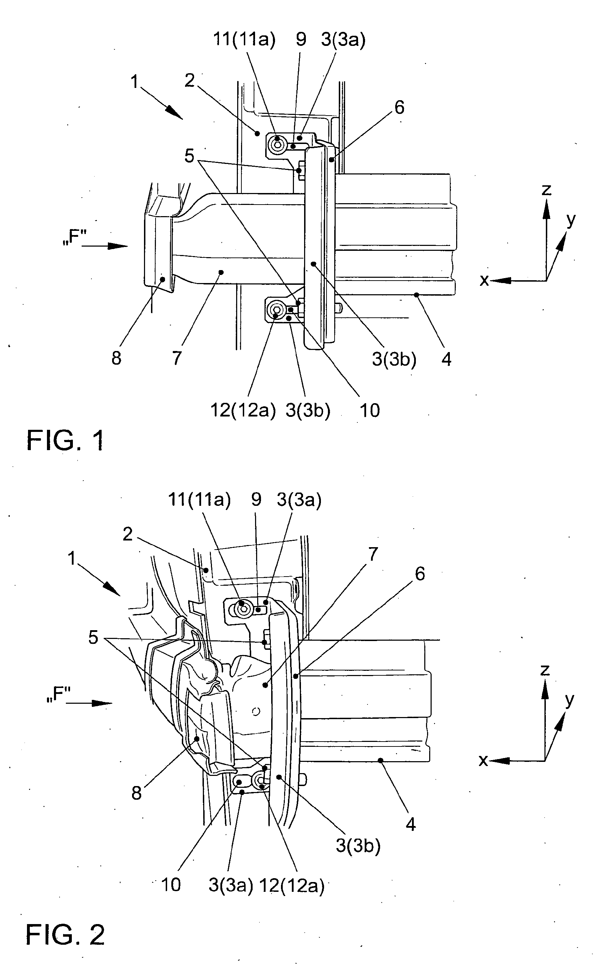

Fig. 1 zeigt äußerst schematisch den vorderen linken Bereich des erfindungsgemäß ausgebildeten Frontendmoduls 1.

Das Frontendmodul 1 umfasst im Wesentlichen einen vorzugsweise rahmenförmigen Montageträger 2, der seinerseits überwiegend aus Kunststoff gebildet ist. Vom Montageträger 2 können, wie eingangs schon beschrieben, eine Mehrzahl nicht näher dargestellter, jedoch an sich bekannter Aggregate und/oder Bauteile, wie beispielsweise ein Kühlersystem, Scheinwerfermodule etc., getragen werden, wodurch vorteilhaft eine Montageeinheit gebildet ist.

Der Montageträger 2 ist seinerseits in Fahrzeugquerrichtung (Y-Richtung) gesehen beidseitig über je eine separat ausgebildete Schottplatte 3 an gegenüberliegend angeordneten vorderen Längsträgern 4 der nicht näher dargestellten Fahrzeugkarosserie abgestützt. Die Schottplatte 3 ist ihrerseits jeweils mittels Verschraubungen 5 an einem Stirnflansch 6 des Längsträgers 4 festgelegt.

In Fahrzeuglängsrichtung (X-Richtung) nach vorn gesehen schließt sich an die Schottplatte 3 ein an sich bekanntes Deformationselement 7 an, an welchem wiederum ein Stoßfängerquerträger 8 abgestützt ist.

Wie der Fig. 1 weiter zu entnehmen ist, ist die Schottplatte 3 als U-förmiges Blechprofil mit zwei in Fahrzeugquerrichtung (Y-Richtung) gesehen gegenüberliegend angeordneten und in Fahrzeuglängsrichtung (X-Richtung) abgestellten Flanschen 3a, 3b ausgebildet und besteht vorzugsweise aus Stahlblech.

Der dem Montageträger 2 benachbarte Flansch 3a verfügt über zwei in Fahrzeughochrichtung (Z-Richtung) gesehen übereinander angeordnete und in Fahrzeuglängsrichtung (X-Richtung) ausgerichtete Langlöcher 9, 10, die ihrerseits jeweils von einem mechanischen Befestigungselement, vorliegend einer Befestigungsschraube 11, 12 durchdrungen sind.

Die Befestigungsschrauben 11, 12 stützen sich einenends vermittels ihres Schraubenkopfes 11a, 12a am Flansch 3a ab und sind anderenends entweder in eine nicht näher gezeigte, mit dem Montageträger 2 fest verbundene Gewindebuchse eingeschraubt oder durchdringen den Montageträger 2 und stützen sich anderenends vermittels einer ebenfalls nicht näher gezeigten Schraubenmutter am Montageträger 2 ab.

Der Fachmann wird nunmehr leicht feststellen können, dass durch diese Befestigungsmaßnahme der Montageträger 2 in Fahrzeugquer- und -hochrichtung (Y- und Z-Richtung) gesehen weitestgehend fest, jedoch in Fahrzeuglängsrichtung (X-Richtung) durch die im jeweiligen Langloch 9, 10 geführte Befestigungsschraube 11, 12 verschiebbar gelagert ist, sofern besagte Befestigungsschrauben 11,12 nicht zu sehr angezogen sind und der durch dieselben bewirkte Reibschluss zwischen dem Montageträger 2 und den beidseitig desselben angeordneten Schottplatten 3 nicht eine Verschiebung des Montageträgers 2 behindert.

Dieser Umstand gestattet jedoch nunmehr, den Montageträger 2 vermittels der Befestigungsschrauben 11, 12 derart definiert an besagten Schottplatten 3 zu befestigen, d. h., die Befestigungsschrauben 11, 12 derart mit einem definierten Anzugsmoment anzuziehen, dass erst im Falle einer infolge eines Frontalcrashs auf den Montageträger 2 einwirkenden erhöhten Anstoßkraft "F" der eingestellte Reibschluss überwindbar und ein definiertes Ausweichen des Montageträgers 2 in Fahrzeuglängsrichtung (X-Richtung) nach hinten, d. h., vom Crashgegner weg, gestattet ist (Fig. 2).

Der einzustellende Reibschluss und demgemäß das auf die Befestigungsschrauben 11, 12 - aufzubringende Anzugsmoment sind hierbei zweckmäßigerweise in Abhängigkeit von einer gewählten erhöhten Anstoßkraft "F", die beispielsweise bei einer Anstoßgeschwindigkeit von 15km/h zu verzeichnen ist, rechnerisch oder empirisch im Rahmen von Versuchen ermittelt.

Nachfolgend wird die Erfindung anhand der Fig. 2 in ihrer Funktion näher beschrieben. Gesetzt den Fall, es ist ein Frontalcrash mit einer erhöhten Anstoßkraft "F" zu verzeichnen, so wird besagte Anstoßkraft "F" zunächst über den Stoßfängerquerträger 8 in die beidenends desselben angeordneten Deformationselemente 7 und weiter in die Längsträger 4 eingeleitet.

Die Deformationselemente 7 werden verformt respektive gestaucht und absorbieren hierdurch Anstoßenergie. Übersteigt die Anstößkraft "F" jedoch einen bestimmten Wert, kommt der Stoßfängerquerträger 8 in Anlage mit dem Montageträger 2, wodurch dieser in der Folge nach hinten verlagert wird, indem der vorab eingestellte Reibschluss vorteilhaft überwunden wird. Der maximale Verlagerungsweg wird durch die Länge der Langlöcher 9, 10 bestimmt.

Vorstehendes Ausführungsbeispiel stellt auf Langlöcher 9, 10 in den Schottplatten 3 ab. Die Erfindung beschränkt sich jedoch nicht auf diese konkrete Ausgestaltung, sondern erfasst auch Langlöcher 9, 10 im Montageträger 2. Ebenso kann es sich auch als vorteilhaft erweisen, wenn sowohl in den Schottplatten 3 als auch im Montageträger 2 zueinander korrespondierende Langlöcher 9, 10 vorgesehen sind, die ihrerseits von einer gemeinsamen Befestigungsschraube 11, 12 durchdrungen sind. Durch diese Maßnahme ist es gestattet, den maximal möglichen Verlagerungsweg des Montageträgers 2 wesentlich zu vergrößern (nicht näher dargestellt).

### Bezugszeichenliste

- 1: Frontendmodul
- 2: Montageträger
- 3: Schottplatte
- 3a: Flansch
- 3b: Flansch
- 4: vorderer Längsträger
- 5: Verschraubung (Schottplatte 3)
- 6: Stirnflansch (Längsträger 4)
- 7: Deformationselement
- 8: Stoßfängerquerträger
- 9: Langloch
- 10: Langloch
- 11: Befestigungsschraube
- 11a: Schraubenkopf
- 12: Befestigungsschraube
- 12a: Schraubenkopf

## Patentansprüche

1. Crashoptimiertes Frontendmodul (1) für ein Fahrzeug, insbesondere Kraftfahrzeug, mit einem zumindest ein Aggregat tragenden Montageträger (2), welcher seinerseits über je eine Schottplatte (3) an vorderen Längsträgern (4) der Fahrzeugkarosserie abgestützt und vermittels mechanischer Befestigungselemente so an besagten Schottplatten (3) verschiebbar befestigt ist, dass im Falle einer infolge eines Frontalcrashs auf den Montageträger (2) einwirkenden erhöhten Anstoßkraft "F" ein definiertes Ausweichen desselben in Fahrzeuglängsrichtung (X-Richtung) nach hinten, d. h., vom Crashgegner weg, gestattet ist, wobei die mechanischen Befestigungselemente jeweils durch wenigstens eine in einem in Fahrzeuglängsrichtung (X-Richtung) ausgerichteten Langloch (9, 10) des Montageträgers (2) und/oder der Schottplatte (3) geführte und einen Reibschluss zwischen dem Montageträger (2) und der Schottplatte (3) bewirkende Befestigungsschraube (11, 12) gebildet sind, und wobei der bewirkte Reibschluss derart definiert eingestellt ist, dass derselbe erst infolge der einwirkenden erhöhten Anstoßkraft "F" überwindbar ist.

2. Crashoptimiertes Frontendmodul (1) nach Anspruch 2, **dadurch gekennzeichnet, dass** der eingestellte Reibschluss und demgemäß das auf die Befestigungsschraube (11, 12) aufzubringende Anzugsmoment in Abhängigkeit von einer gewählten Anstoßkraft "F" rechnerisch oder empirisch im Rahmen von Versuchen ermittelt sind.

3. Crashoptimiertes Frontendmodul (1) nach Anspruch 1 oder 2, **dadurch gekennzeichnet, dass** die Schottplatte (3) als separates Anbauteil ausgebildet sowie an einem Strirnflansch (6) des Längsträgers (4) festgelegt ist und zumindest einen in Fahrzeuglängsrichtung (X-Richtung) abgestellten Flansch (3a) zur Aufnahme der zumindest einen Befestigungsschraube (11, 12) aufweist.

4. Crashoptimiertes Frontendmodul (1) nach einem der Ansprüche 1 bis 3, **dadurch gekennzeichnet, dass** der Montageträger (2) überwiegend aus Kunststoff gebildet ist.

5. Crashoptimiertes Frontendmodul (1) nach einem der Ansprüche 1 bis 4, **dadurch gekennzeichnet, dass** die Schottplatte (3) als Blechprofil aus vorzugsweise Stahlblech gebildet ist.
